# EUROPEAN PATENT SPECIFICATION

(11) **EP 1 613 234 B1**
(45) Date of publication and mention of the grant of the patent: **04.06.2008**
(21) Application number: 04707277.2
(22) Date of filing: 02.02.2004
(51) Int. Cl.: A61C 5/00

(54) **INSERTS FOR TOOTH REPAIR**
EINSÄTZE ZUR ZAHNREPARATUR
INSERTS DE RESTAURATION DENTAIRE

(30) Priority: 10.04.2003 IS 677703
(43) Date of publication of application: 11.01.2006
(73) Proprietor: Globodent EHF., 600 Akureyri (IS)
(72) Inventor: JONSSON, Egill, IS-600 Akureyri (IS)
(74) Representative: Fridriksson, Einar Karl
(86) International application number: PCT/IS2004/000002
(87) International publication number: WO 2004/089236

(56) References cited:
- WO-A-02/34154
- DE-C- 19 513 568
- DE-U- 29 705 583
- US-A- 5 567 156
- US-A- 6 022 217

## Description

### FIELD OF INVENTION

The present invention is within the field of dentistry and more particularly relating to dental inserts for tooth repair.

### BACKGROUND AND PRIOR ART

Dental decay remains a very common health problem affecting the majority of people around the world. Methods for repairing dental decay often make use of aesthetically non-pleasing materials (mercury amalgam) and dental inserts may have a limited lifetime, shorter than the life span of the patient.

Repair of dental decay such as caries may be broadly divided into direct and indirect repair methods. In direct repair methods the caries is removed and the cavity thus created is further cleaned and prepared. Thereafter a filling material, most often dental mercury amalgam or a plastic composite material is inserted into the prepared cavity. The filling, once hardened, is finished to smoothen out any rough edges and essentially create a surface similar in morphology to the original tooth.

Indirect repair methods on the other hand, involve the use of prepared inserts, e.g. from ceramic material (porcelain or glass) or gold, that are cast in a mold made after the cavity which has been prepared as described above. The insert, which typically takes a couple of days to manufacture, is fastened in place with dental adhesive cement. Indirect methods have been used for a long time and they provide stronger and longer lasting inserts than can be provided by direct methods. The indirect methods however, are significantly more expensive; both due to the cost of producing the inserts (i.e. equipment needed for such production) and more work needed by the dentist, and at least two visits are required by the patient.

Modified indirect methods have been developed based on pre-fabricated inserts such as described in e.g. US 5,567,156, US 5,697,787, DE 19513568, DE 4123237, DE 29705583 U, and DE 3620542. Such inserts however are typically conically shaped (such as e.g. in US 5,567,156, or as manufactured under the trademark Cerana^{™}) or semi-spherically shaped (US 5,697,787). These shapes are limited by methods to readily prepare cavities to match pre-fabricated inserts.

Other modified indirect methods include more effective methods to manufacture solid inserts, which allow the dentist himself to manufacture inserts in his own clinic. Equipment for such manufacturing is sold under the trademark Cerec^{™}, and produced by Sirona GmbH in Germany.

The use of pre-made inserts such as mentioned above has been severely limited due to the difficulty of preparing cavities of exact size and shape to fit the filling, with currently available prior art methods.

The present inventor has developed effective methods and apparatus to prepare exactly shaped cavities to fit pre-fabricated fillings, described in pending patent application WO 02/34154. These methods allow the use of a great variety of pre-fabricated inserts, essentially of any desired shape.

Typically, pre-fabricated inserts still need final finishing after insertion and fastening in the prepared cavity, such that the external surfaces match the outer surfaces of the tooth. The outer curvature of teeth can vary significantly, depending both on the position of the tooth in the dental arch, and differences between individuals. Consequently, to obtain a smooth continuous surface of the exposed surface of a pre-fabricated filling and its surrounding outer tooth surfaces, any protruding edges of the insert need to be finished. This can be very difficult to achieve in particular with proximal inserts, where the exposed surface of the insert is on a proximal surface of a tooth, i.e. facing the mesial or distal surface of an adjacent tooth. If, on the other hand, the insert is too "short" (or too shallow), such that it's exposed surface is below the adjacent edges of the outer tooth surface, the weakened tooth edges may easily fracture and plaque build-up may increase, followed by secondary caries.

The present invention provides novel pre-fabricated inserts that greatly simplify the final finishing of repaired teeth, such that the insert and the adjacent outer surfaces of the tooth form a continuous surface.

### SUMMARY OF INVENTION

The present invention according to claim 1 provides in a first aspect, a pre-formed tooth insert for insertion in a prepared cavity in a tooth, wherein said insert has at least one surface (1) that remains exposed when the insert is placed in the prepared cavity, said insert has a contact surface (5) in continuation of the exposed surface(s) (1), which contact surface comes in contact with the inner surface of the prepared tooth cavity when the insert is placed in the cavity, said contact surface forming substantially vertical edges (15) at the junction with said exposed surface, and each of said substantially vertical edges having a chamfer or groove (2) along at least a portion of the edge such that when said insert is placed in said cavity, the chamfer or groove is located at the junction between the exposed surface and an adjacent outer surface of the tooth, allowing insertion of a shapable resin material to form essentially a continuous surface. In useful embodiments the cavity is formed after the insert's outline, i.e. a series of pre-formed insert may be provided, which suit most types repair situations, and a cavity is prepared into which a selected pre-formed insert will fit.

### FIGURES

Figure 1 illustrates an embodiment of an insert of the present invention, 1A: top view, 1 B top view of alternative embodiment, 1C: side view, 1D: rear view, 1E: bottom view, 1F: front view, 1G: side view of filling with bottom lip.

Figure 2 shows alternative embodiments of an insert, 2A: side view, 2B: top view, 2C and 2D: perspective views, 2E: perspective view, showing side grooves (2) and bottom inclination (8).

### DETAILED DESCRIPTION

The pre-fabricated inserts of the invention can have sizes and shapes that will fit the most common types and locations of tooth decay. The invention offers the possibility for a dentist to have a stock of pre-fabricated inserts of the most commonly needed shapes and sizes (it is estimated that only 9 different inserts would be suitable and sufficient for the repair of about 90% of caries infections which appear in molars (Ericsson, Yngve et al., Kariologiska principer, 1980, Lagerblads AB).
The following terms are used herein to describe the anatomy and geometry of teeth and tooth insert:

| | |
|---|---|
| mesial: | toward the center (median) of the dental arch; |
| distal: | away from the center (median) line of the dental arch; |
| facial: | toward the cheeks or lips; |
| lingual: | toward the tongue; |
| occlusal surface: | the biting surface; the surface that contacts an antagonist tooth in an opposing arch; |
| cervical surface: | the "side" (facial, lingual or proximal) surfaces of a tooth |
| proximal surface: | the surface of a tooth that is toward another tooth on the arch; |
| embrasure: | where curvatures of two teeth in the same arch come in contact, forming a line of contact, which is an occlusal embrasure (contact between curvatures of tw occlusal surfaces), lingual embrasure (between two adjacent lingual surfaces) and buccal embrasure (between two adjacent buccal surfaces. |

The pre-formed tooth insert according to the present invention is made of any suitable material that can give strong long-lasting inserts and which material is biologically inert; such as preferably cheramic materials, e.g., porcelain, or mixtures of compressed composites and preheated filling materials or other types of plastic character filling material. The insert may essentially have any desired shape, however, the invention in its presently preferred embodiment is particularly useful for proximal inserts, for reasons discussed above.

The insert has at least one surface (1) which remains exposed when the insert is placed in the prepared cavity, the exposed surface typically comprises a surface selected from a proximal, facial and/or lingual surface of a tooth. Inserts with a proximal exposed surface are particularly useful, and in certain embodiments the insert has a proximal exposed surface that extends by a smooth curvature from a facial to a proximal surface and/or from said proximal surface to a lingual surface, and preferably from the occlusal to a cervical surface of a tooth, forming an intact contact point with an adjacent tooth. In the presently preferred emodiments, the exposed surface extends to the occlusal surface of the tooth, as the methods presently envisioned for preparing the cavity rely on tools that work from the occlusal surface down into the tooth, at an angle substantially along the axis of the tooth.

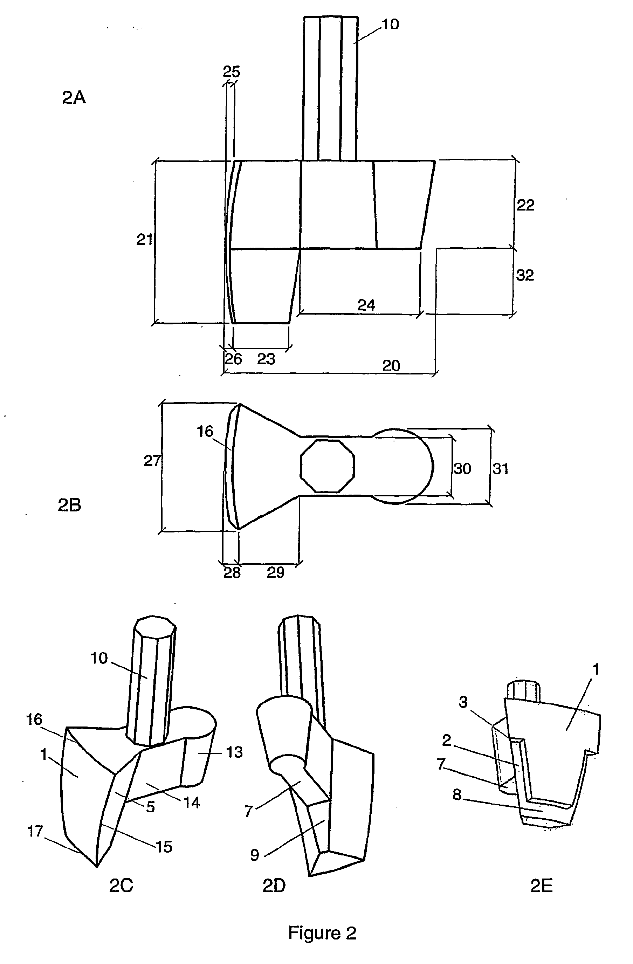

The insert has at least one contact surface (5) in continuation of the exposed surface(s) (1), which contact surface comes in contact with the inner surface of the prepared tooth cavity when the insert is placed in the cavity, said contact surface forming substantially vertical edges (15) at the junction with at least part of the exposed surface. Each of said substantially vertical edges has an inclination (2) along at least a portion of the edge such that when said insert is placed in said cavity the inclination or groove is located at the junction between the exposed surface and an adjacent outer surface of the tooth. The inclination (2) can be a flat surface intersecting the exposed surface (1) and adjacent contact surface (5), however, the term inclination herein also comprises a groove that be curved or semi-curved, or comprised of two or more inclined surfaces, such as illustrated in Figure 2E. The purpose of the inclination is to allow insertion of a shapable filling material (cement / resin) or composite material in the inclination before or after insertion of the insert, such that the exposed surface of the insert and the adjacent outer surface(s) can form essentially a continuous surface. The cement material may be readily shaped before it hardens, even if the grooves are substantially in an interproximal space. Suitable cement materials include presently available materials such as Heliomolar®, Ketacmolar® or Doxadent® and such.

In particular embodiments, the prepared cavity extends to at least two outer surfaces of the tooth, selected from a proximal (either mesial or distal) surface, a lingual and a facial surface, in which case the insert has an exposed proximal surface that extends to a facial or lingual exposed surface, as mentioned above where the insert has a contact point touching the adjacent tooth.

The inclination or grooves (2) mentioned above will generally extend from the front bottom surface (11) of the insert to a height (3) such that the inclinations reach substantially the occlusal embrasure of the tooth being repaired. It should be noted that the portion of the insert which is above the occlusal embrasure is more easily finished with a suitable finishing tool, e.g., a turbine, an ultrasonic bur, or a file; but such tools will not readily reach into the interproximal space beneath the occlusal embrasure.

In certain embodiments, the bottom edge (17) of the exposed insert surface also has an inclination (8), that likewise can be filled with a shapable resin.

The size of the insert according to the invention can vary, depending on the size and location of the cavity that is to be repaired, and the size of the tooth having the cavity. The height of the insert can be anywhere in the range of about 2 to about 15 mm, and preferably from between about 3 to about 10 mm, such as in the range of about 3-7 mm; typically the height corresponds to the distance from the heighest occlusal cusp removed from the tooth and replaced by a corresponding cusp shape of the insert and down to the bottom surface of the insert, which typically is below the occlusal embrasure but generally above the gingival line.

The width of the insert is typically in the range of about 1mm to about 10mm, such as in the range of about 2 mm to about 10 mm, or from about 2 mm to about 8 mm. Note that in certain embodiments the insert is wedge-shaped as seen from a top-view, such that the outer exposed surface (the proximal surface in case of a proximal insert) is wider than the central portion of the insert, as shown in Figure 2B where the proximal width (27) is wider than the central width (30). Such inserts are suitable where the decay is mostly by the surface (e.g. proximal surface) of the tooth, in this case removal of healthy tooth material from the central part of the tooth should be minimized; however, extending the insert to the central part of the tooth will greatly enhance its strength.

The exposed surface (1) can in certain embodiments be wedge-shaped, as indicated in Figures 2C-E, such that the occlusal edge (16) of the surface is wider than the bottom front edge (17), i.e. the substantially vertical edges (15) are slightly tilted.

The insert preferably has a horizontal curvature on the exposed surface, the degree of the curvature may be indicated by the curvature indent (28) as defined in Figure 2B. Additionally or alternatively, the surface may have a vertical curvature as seen in Figure 2A, which is indicated by the top curvature indent (25) and bottom curvature indent (26).

As mentioned above, a simple series of a relatively limited number (e.g., 8-15, and preferably 8-12, such as 10 or 12) of pre-formed inserts can be used for most caries infections. Suitable dimensions of such inserts are set forth in Table 1, where the dimensional parameters are defined with reference to Figure 2 as follows:
(20) overall length;
(21) proximal depth (heigth of the exposed surface);
(27) proximal width (width of the exposed surface);
(30) center part width;
(22) occlusal depth;
(32) lift (difference between the proximal depth (21) and occlusal depth (22);
(23) thickness of proximal box;
(24) length of lift area;
(25) top curvature indent;
(26) bottom curvature indent;
(28) side curvature indent.

| | (27) | (30) | (21) | (22) | (20) | (23) |
|---|---|---|---|---|---|---|
| Insert #1 | 3,0 | 1,5 | 4,0 | 2,5 | 4,0 | 1,5 |
| Insert #2 | 3,5 | 2,0 | 4,0 | 2,5 | 4,0 | 1,5 |
| Insert #3 | 4,0 | 2,0 | 4,5 | 3,0 | 4,0 | 1,5 |
| Insert #4 | 4,5 | 2,0 | 5,0 | 3,0 | 4,5 | 1,5 |
| Insert #5 | 5,0 | 2,5 | 5,5 | 3,0 | 5,0 | 1,5 |
| Insert #6 | 5,0 | 2,5 | 6,5 | 3,0 | 5,0 | 1,5 |
| Insert #7 | 5,0 | 2,5 | 6,5 | 3,0 | 5,5 | 1,5 |
| Insert #8 | 6,0 | 3,0 | 7,0 | 3,0 | 5,5 | 1,5 |
| Insert #9 | 7,0 | 3,0 | 7,0 | 3,0 | 6,0 | 1,5 |
| Insert #10 | 7,5 | 6,0 | 7,0 | 3,0 | 6,0 | 1,5 |

The top part of the insert may be shaped such that it will generally extend beyond and above the upper surface edges of the prepared cavity, as the occlusal surfaces of teeth vary greatly and thus it is difficult to have a pre-formed insert essentially matching the occlusal surface of an individual tooth. Therefore, it is generally necessary to shape the top surface of the insert (by use of, e.g., a stone or bur) to form an occlusal surface matching the occlusal edges of the cavity.

It is found to be useful to have a mounting pin (10) extending from the top of the insert to hold the insert while it is being inserted. Said mounting pin may simply be a continuous part of the insert, i.e. from the same material as the insert, or from an alternative material, e.g., a plastic material which is fixed to the top of the insert. The mounting pin has suitable dimensions for holding with fingers, forceps or a special tool, e.g., a height in the range of about 5-20 mm, and a suitable width, such as of about t 2-5 mm. If the insert has a mounting pin (10) this will have to be removed.

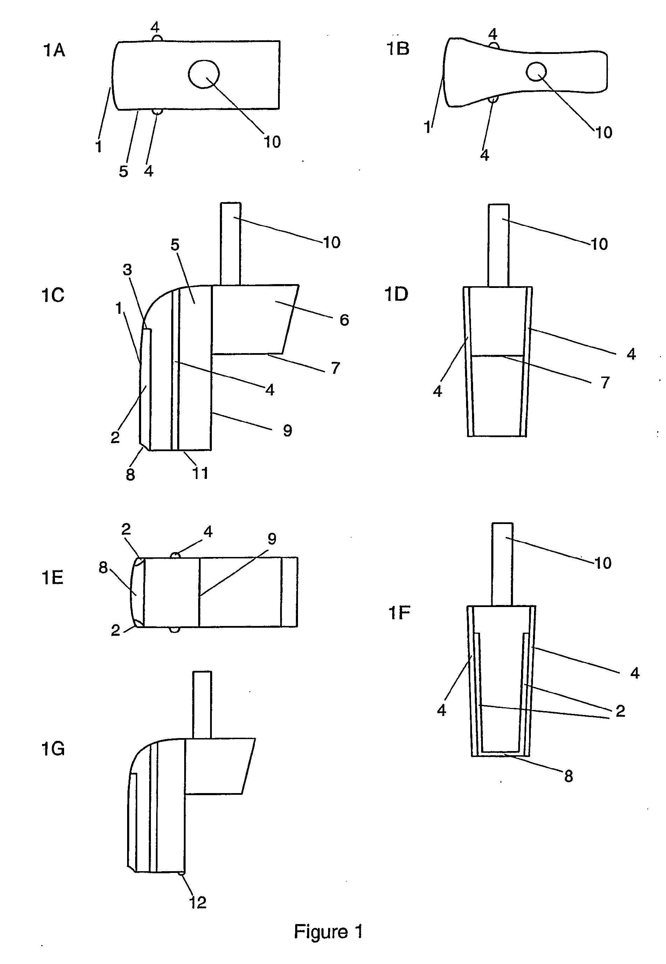

As shown in Figure 1, the insert has in one embodiment two bottom surfaces (7, 11), a proximal (or facial/lingual) front bottom surface (11) and a higher central bottom surface (7), such that less healthy tooth tissue needs to be removed if the decay is mostly close to the outer surface of the tooth. The insert may however, also have a single bottom surface, this would in particular apply to smaller inserts to maintain sufficient strength of the insert. The central portion (6) of the insert gives the insert added strength and support in the tooth.

In one embodiment, the central portion has an anchor part (13) that is wider than the center part (14) of the central portion. The anchor part provides a locking mechanism that further strengthens the insert-tooth binding.

In a useful embodiment of the invention the insert is adapted to fit into at least one groove located on a surface of the prepared cavity, which groove lies in a vertical plane (i.e., vertical in relation the central axis of the tooth). Typically, the insert of such embodiment comprises a lip (4) which fits snugly into the groove, when the insert is placed from above into the prepared cavity. This lip and groove fastening will further secure the position of the insert such as it cannot slide out from the cavity in to the proximal (or facial/lingual) direction. The insert can be adapted to fit into two grooves facing each other on opposite sides of the prepared cavity, as shown in Figure 1, the insert may also (or additionally) be adapted to fit into a groove located on the gingival floor of the cavity. Such a floor groove may extend between two sidewall grooves, as shown in Figure 1F, 1G. In such embodiments, a bottom lip (12) on the insert is shaped to fit in the gingival floor groove. Typically, the bottom groove and matching bottom lip will extend along the bottom surface of the insert, extending between the gingival ends of side grooves in embodiments where the insert has both side lips (4) and a bottom lip (12). The aforementioned grooves and the mathing lips will generally lie in vertical plane, such that the insert can be inserted in the prepared cavity by a direct vertical translational movement. Said grooves on the side(s) and bottom of the cavity can be of any suitable shape and width that can be readily prepared with available tools of the art, e.g. such as an apparatus as described in WO 02/34154. Generally, the grooves in the range of about 0.5-5 mm in width, and more typically in the range of about 0.5-2 mm in width, with a depth of similar dimensions, such as in the range of about 0.2-3 mm, including about 0.5-2 mm. Thus, the matching lips will have the same dimensions, such that the insert will fit snugly in the prepared cavity.

It should be noted that Figure 1 is meant to illustrate the general functional principles of the inserts of the invention, and does not necesserily represent the most suitable shapes of such inserts. The contact surfaces (5) may e.g. be curved as shown in Figure 1B, the contact lips (4, 12) may have other shapes than shown, etc.

In a useful embodiment of the invention, the insert is a proximal insert with two contact surfaces (5) being a facial surface and a lingual surface wherein at least one and preferably both of the facial and lingual sides of the insert diverges from the tooth axis, such that the exposed surface becomes wider at its occlusal (top) end than its gingival (bottom) end,as illustrated by Figure 1D and 1F that show a rear view and front view of an insert with such sloping side surfaces. Suitably, the facial surface and/or lingual surface diverge from the tooth axis by an angle in the range of about 1° to about 10°, and preferably of about 2° to about 7°. If present, side lips (4) in this case will fit into two divergent grooves on the cavity sidewall surfaces that are prepared with angles such that the insert fits snugly in the cavity.

A method for repairing a tooth (e.g., removing caries infected tissue and replacing with a tooth insert) by use of the insert of the present invention is described. The method comprises selecting an insert that is suitable for the size and location of decayed tooth tissue that needs repair; shaping a cavity in the tooth to be repaired into which the selected insert will fit; applying a dental cement or adhesive to the inner surface of said cavity; placing said insert in said cavity; applying a shapable resin material into the inclinations or grooves located on the interfaces between said insert and the prepared cavity; shaping said resin material so as to form a continuous outer surface of said tooth with insert; allowing the resin material to harden; and finishing parts of the insert that extend out of the prepared cavity

An apparatus such as referred to above and described in detail in WO 02/34154 in particularly useful to shape a cavity with pre-determined shape and dimensions to match a pre-formed insert of the invention. The insert is subsequently inserted after applying suitable dental cement or dental adhesive such as, e.g., Calibra ®, Dual^{™} Cement-Ivoclar Vivadent, RelyX^{™} ARC Adhesive Resin Cement 3M ESPE, and such. After the shapable resin material ha been inserted in the inclinations, the resin is shaped to create a continuous surface. The top portion of the insert will typically need to shaped to create a continuous occlusal surface of the tooth and insert, as discussed above. If the insert has a mounting pin (10) this will have to be removed.

## Claims

1. A pre-formed tooth insert for insertion In a prepared cavity in a tooth, wherein
a. said insert has at least one surface (1) that remains exposed when the insert is placed in the prepared cavity,
b. said insert has a contact surface (5) in continuation of the exposed surface(s) (1), which contact surface comes in contact with the inner surface of the prepared tooth cavity when the insert is placed in the cavity, said contact surface forming substantially vertical edges at the junction with said exposed surface, **characterized in that**
c. each of said substantially vertical edges having a chamfer or groove (2) along at least a portion of the edge such that when said insert is placed in said cavity the chamfer or groove (2) is located at the junction between the exposed surface and an adjacent outer surface of the tooth, allowing insertion of a shapable resin material to form essentially a continuous surface.

2. The insert of claim 1, wherein said exposed surface comprises a surface selected from the group consisting of a proximal, mesial, proximal distal, facial and lingual surface of a tooth.

3. The insert of claim 1, which is adapted to fit a prepared proximal cavity in a tooth, such that when In place the exposed surface (1) forms part of a proximal surface of the tooth.

4. The Insert of claim 1, which is adapted to fit a prepared cavity in a tooth, said cavity extending to at least two outer surfaces of said tooth, selected from the group consisting of proximal, lingual and/or facial surfaces.

5. The insert of claim 1, wherein the chamfers or grooves (2) extend from the bottom surface (11) of the insert to a height (3) such that the chamfers or grooves (2) reach substantially the occlusal embrasure.

6. The Insert of claim 1 further comprising an a chamfer or groove (8) along the vertical bottom edge of the exposed surface (1).

7. Then insert of claim 1 having an anchor part (13) opposite the exposed surface (1), the anchor part being wider than the center part (14) of the insert.

8. The Insert of claim 1, wherein the height of the insert is in the range of about 3 mm to about 10mm.

9. The insert of claim 1, wherein the occlusal width of the insert is in the range of about 2 mm to about 10mm.

10. The insert of claim 3, wherein at least one and preferably both of the facial and lingual sides of the insert diverges from the tooth axis such that the exposed surface is wider at its occlusal end than its gingival end.

11. The insert of claim 10 wherein at least one and preferably both of the facial and lingual sides of the insert diverges from the tooth axis by an angle in the range of about 1° to about 10°, and preferably of about 2° to about 7°.

12. The insert of claim 1 wherein the insert Is adapted to fit into at least one groove located on a surface of the prepared cavity, which groove lies In a substantially vertical plane.

13. The insert of claim 12, wherein the insert is adapted to fit into two grooves facing each other on opposite sides of the prepared cavity.

14. The insert of claim 1, wherein the insert is adapted to fit into a groove located on the gingival floor of said cavity.

15. The insert in claim 14, wherein the groove located on the gingival floor extends between the gingival endpoints of two opposite substantially vertical grooves.

## Patentansprüche

1. Vorgefertigter Zahneinsatz zum Einfügen in einen vorbereiteten Hohlraum, wobei
a. der Einsatz mindestes eine Fläche (1) hat, die exponiert bleibt, wenn der Einsatz im vorbereiteten Hohlraum angeordnet wird,
b. der Einsatz eine die exponierte(n) Fläche(n) (1) fortsetzende Kontaktfläche (5) aufweist, wobei die Kontaktfläche in Kontakt mit der Innenfläche des vorbereiteten Zahnhohlraums tritt, wenn der Einsatz im Hohlraum angeordnet wird, wobei die Kontaktfläche im Wesentlichen vertikale Kanten an der Kontaktstelle mit der exponierten Fläche bildet, **dadurch gekennzeichnet, dass**
c. jede der im Wesentlichen vertikalen Kanten eine Kerbe oder Rille (2) entlang mindestens eines Abschnitts der Kante in einer Weise aufweist, dass sich beim Anordnen des Einsatzes in dem Hohlraum die Kerbe oder Rille (2) an der Kontaktstelle zwischen der exponierten Fläche und einer benachbarten Außenfläche des Zahns befindet, wodurch das Einfügen eines formbaren Harzes ermöglicht wird, um im Wesentlichen eine kontinuierliche Fläche zu bilden.

2. Einsatz nach Anspruch 1, wobei die exponierte Fläche eine Fläche umfasst, die aus der aus einer proximalen, mesialen, proximal-distalen, fazialen und lingualen Fläche eines Zahns bestehenden Gruppe ausgewählt ist.

3. Einsatz nach Anspruch 1, welcher für einen vorbereiteten Hohlraum in einem Zahn derart passend angepasst ist, dass nach dem Anordnen die exponierte Fläche (1) einen Bestandteil einer proximalen Fläche des Zahns bildet.

4. Einsatz nach Anspruch 1, welcher für einen vorbereiteten Hohlraum in einem Zahn passend angepasst ist, wobei sich der Hohlraum mindestens auf zwei Außenflächen des Zahns erstreckt, die aus der aus proximalen, lingualen und/oder fazialen Flächen bestehenden Gruppe ausgewählt sind.

5. Einsatz nach Anspruch 1, wobei sich die Kerben oder Rillen (2) von der Bodenfläche (11) des Einsatzes bis zu einer Höhe (3) derart erstrecken, dass die Kerben oder Rillen im Wesentlichen den okklusalen Zahnzwischenraum erreichen.

6. Einsatz nach Anspruch 1, ferner umfassend eine Kerbe oder Rille (8) entlang der vertikalen Bodenkante der exponierten Fläche (1).

7. Einsatz nach Anspruch 1 mit einem Verankerungsstück (13) gegenüber der exponierten Fläche (1), wobei das Verankerungsstück größer als der Mittelteil (14) des Einsatzes ist.

8. Einsatz nach Anspruch 1, wobei die Höhe des Einsatzes im Bereich von etwa 3 mm bis etwa 10 mm ist.

9. Einsatz nach Anspruch 1, wobei die okklusale Breite des Einsatzes im Bereich von etwa 2 mm bis etwa 10 mm liegt.

10. Einsatz nach Anspruch 3, wobei mindestens eine und vorzugsweise beide der fazialen und lingualen Seiten des Einsatzes von der Zahnachse derart abweichen, dass die exponierte Fläche am okklusalen Ende breiter als an ihrem gingivalen Ende ist.

11. Einsatz nach Anspruch 10, wobei mindestens eine und vorzugsweise beide der fazialen und lingualen Seiten des Einsatzes von der Zahnachse durch einen Winkel im Bereich von etwa 1° bis etwa 10° und vorzugsweise von etwa 2° bis etwa 7° abweichen.

12. Einsatz nach Anspruch 1, wobei der Einsatz angepasst ist, um in mindestens eine Rille, die sich auf der Fläche des vorbereiteten Hohlraums befindet, zu passen, wobei die Rille in einer wesentlich vertikalen Ebene liegt.

13. Einsatz nach Anspruch 12, wobei der Einsatz angepasst ist, um in zwei Rillen zu passen, die sich gegenseitig auf entgegengesetzten Seiten des vorbereiteten Hohlraums gegenüberliegen.

14. Einsatz nach Anspruch 1, wobei der Einsatz angepasst ist, um in eine Rille, die sich auf dem gingivalen Boden des Hohlraums befindet, zu passen.

15. Einsatz nach Anspruch 14, wobei die Rille, die sich auf dem gingivalen Boden befindet, zwischen den gingivalen Endpunkten der zwei entgegengesetzten wesentlich vertikalen Rillen erstreckt.

## Revendications

1. Insert dentaire préformé, destiné à être inséré dans une cavité préparée dans une dent, dans lequel
a. ledit insert possède au moins une surface (1) restant exposée lorsque l'insert est placé dans la cavité préparée,
b. ledit insert possède une surface de contact (5) dans le prolongement de la ou des surface(s) exposée(s) (1), ladite surface de contact entrant en contact avec la surface intérieure de la cavité de dent préparée lorsque l'insert est placé dans la cavité, ladite surface de contact comportant des bords substantiellement verticaux au niveau de la jonction avec ladite surface exposée, **caractérisé en ce que**
c. chacun des bords substantiellement verticaux possède un chanfrein ou une rainure (2), au moins le long d'une portion du bord, de sorte que lorsque l'insert est placé dans ladite cavité, le chanfrein ou la rainure (2) se trouve au niveau de la jonction entre la surface exposée et une surface extérieure adjacente de la dent, permettant ainsi l'insertion d'un matériau en résine déformable pour former une surface essentiellement continue.

2. Insert selon la revendication 1, dans lequel ladite surface exposée comprend une surface sélectionnée parmi le groupe composé d'une surface proximale, d'une surface mésiale, d'une surface proximale distale, d'une surface faciale et d'une surface linguale d'une dent.

3. Insert selon la revendication 1, lequel est conçu de façon à s'adapter à une cavité proximale préparée dans une dent, de sorte que lorsque l'insert est en place, la surface exposée (1) forme une partie d'une surface proximale de la dent.

4. Insert selon la revendication 1, lequel est conçu de façon à s'adapter à une cavité préparée dans une dent, ladite cavité s'étendant sur au moins deux surfaces extérieures de ladite dent, sélectionnées parmi le groupe composé d'une surface proximale, d'une surface linguale et/ou d'une surface faciale.

5. Insert selon la revendication 1, dans lequel les chanfreins ou rainures (2) s'étendent à partir de la surface de fond (11) de l'insert, sur une hauteur (3) telle que les chanfreins ou rainures (2) atteignent substantiellement l'embrasure occlusale.

6. Insert selon la revendication 1, comprenant en outre un chanfrein ou une rainure (8) le long du bord inférieur vertical de la surface exposée (1).

7. Insert selon la revendication 1, possédant une partie d'ancrage (13) du côté opposé de la surface exposée (1), la partie d'ancrage étant plus large que la partie centrale (14) de l'insert.

8. Insert selon la revendication 1, dans lequel la hauteur de l'insert est comprise entre environ 3 et environ 10 mm.

9. Insert selon la revendication 1, dans lequel la largeur occlusale de l'insert est comprise entre environ 2 et environ 10 mm.

10. Insert selon la revendication 3, dans lequel au moins l'un et de préférence les deux parmi le côté facial et le côté lingual de l'insert s'écartent de l'axe de la dent, de sorte que la surface exposée soit plus large au niveau de son bord occlusal qu'au niveau de son bord gingival.

11. Insert selon la revendication 10, dans lequel au moins l'un et de préférence les deux parmi le côté facial et le côté lingual de l'insert s'écartent de l'axe de la dent, selon un angle compris entre environ 1 et environ 10°, et de préférence entre environ 2 et environ 7°.

12. Insert selon la revendication 1, dans lequel l'insert est adapté de manière à pouvoir être placé dans au moins à une rainure située dans une surface de la cavité préparée, ladite rainure s'étendant sur un plan substantiellement vertical.

13. Insert selon la revendication 12, dans lequel l'insert est adapté de manière à pouvoir être placé dans deux rainures situées l'une en face de l'autre, dans des côtés opposés de la cavité préparée.

14. Insert selon la revendication 1, dans lequel l'insert est adapté de manière à pouvoir être placé dans une rainure située dans la base gingivale de ladite cavité.

15. Insert selon la revendication 14, dans lequel la rainure située dans la base gingivale s'étend entre les points extrêmes gingivaux des deux rainures opposées substantiellement verticales.
